(19) Europäisches Patentamt
European Patent Office
Office européen des brevets

(11) EP 2 141 927 A1

# (12) EUROPEAN PATENT APPLICATION

(43) Date of publication:
**06.01.2010 Bulletin 2010/01**

(51) Int Cl.:
***H04N 7/26*** *(2006.01)*

(21) Application number: **08012036.3**

(22) Date of filing: **03.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Panasonic Corporation**
**Kadoma-shi**
**Osaka 571-8501 (JP)**

(72) Inventors:
- **Narroschke, Matthias, Dr.**
  **63225 Langen (DE)**
- **Wittmann, Steffen**
  **63225 Langen (DE)**
- **Wedi, Thomas, Dr.**
  **63225 Langen (DE)**

(74) Representative: **Grünecker, Kinkeldey, Stockmair & Schwanhäusser**
**Anwaltssozietät**
**Leopoldstrasse 4**
**80802 München (DE)**

## (54) Filters for video coding

(57) The present invention relates to optimum filters in the context of video coding based on differential pulse code modulation. It is the particular approach of the present invention to provide two filters that operate independently of each other on the prediction signal and the (quantized prediction) error signal, rather than a single filter operating on the reconstructed signal, i.e., the sum of the prediction signal and the error signal. In this manner, different statistical properties of the prediction signal and the error signal can be taken into account, resulting in improved coding efficiency due to lower prediction and/or reconstruction errors.

Fig. 4

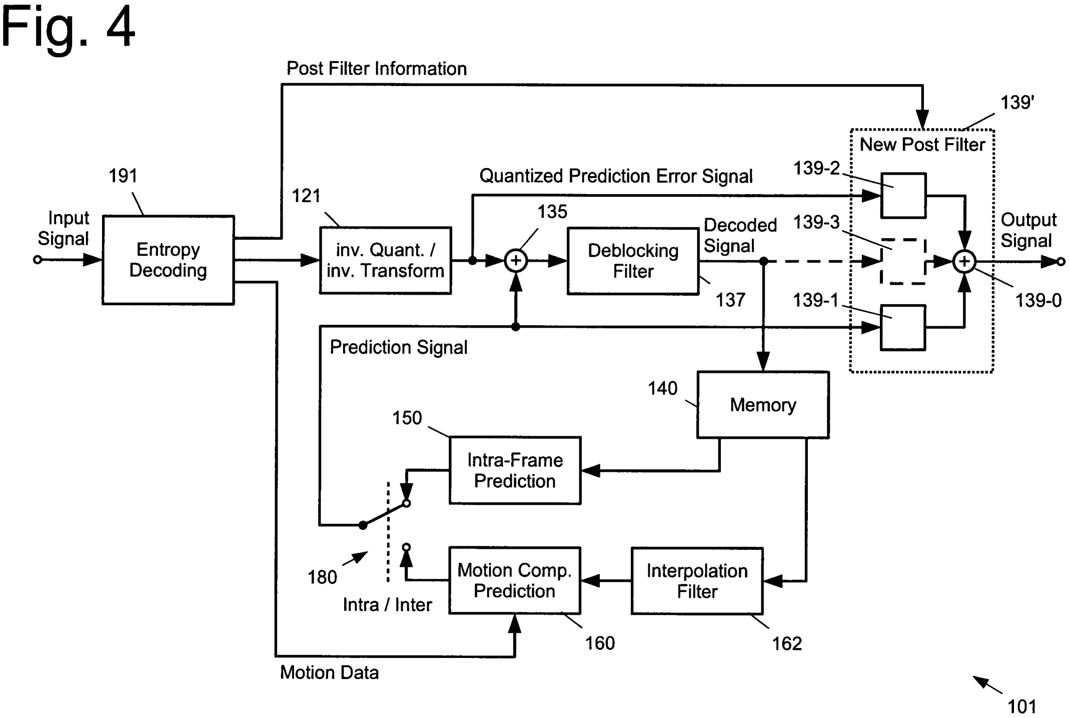




Printed by Jouve, 75001 PARIS (FR)

## Description

The present invention relates to filters for video coding, in particular to filters applied to a signal reconstructed from a prediction signal and a quantized prediction error signal in the context of differential pulse code modulation.

BACKGROUND OF THE INVENTION

For the compression of video data, a plurality of video encoding standards has been developed. Such video standards are, for instance, ITU-T standards denoted with H.26x and ISO/IEC standards denoted with MPEG-x. The most up-to-date and advanced video encoding standard is currently the standard denoted as H.264/MPEG-4 AVC.

All of these standards are based on hybrid video coding, which consists of the following main stages:

(a) Dividing each individual video frame into two-dimensional blocks of pixels in order to subject each video frame to data compression at a block level.

(b) Decorrelating spatiotemporal video information by applying a spatio-temporal prediction scheme to each block and by transforming the prediction error from the spatial domain into the frequency domain so as to obtain coefficients.

(c) Reducing the overall amount of data by quantizing the resulting coefficients.

(d) Compressing the remaining data by encoding the quantized coefficients and

prediction parameters by means of an entropy coding algorithm.

Hence, state-of-the-art video standards employ a Differential Pulse Code Modulation (DPCM) approach which only transmits differences between blocks of an input video sequence and their predictions based on previously encoded blocks ("the locally decoded image"). One of the prediction schemes that may be employed by these video coding standards is motion compensated prediction. In this prediction scheme, at least one motion vector is determined for each block of video data in order to describe image displacements caused be object and/or camera movements. Based on the motion vectors determined, the image content of one block may be predicted at least to a certain extend from the image content of previously coded blocks. The difference between the predicted and the actual input image content is called the prediction error, which is then encoded together with the motion vectors rather than the actual input image content. In this manner, a substantial reduction in the amount of information to be coded can be achieved for most "natural" video sequences.

Figure 1 is an exemplary block diagram of a conventional video encoder, which is in accordance with the H. 264 / AVC standard. The video encoder, generally denoted by reference numeral 100, comprises a subtractor 110 for determining differences between a current block of a video image (input signal) and a prediction signal of the current block which is based on previously encoded blocks ("the locally decoded image") stored in memory 140. The memory unit 140 thus operates as a delay unit that allows a comparison between current signal values and a prediction signal generated from previous signal values. A transform and quantization unit 120 transforms the resulting prediction error from the spatial domain to the frequency domain and quantizes the obtained coefficients. An entropy coding unit 190 entropy encodes the quantized coefficients.

The locally decoded image is provided by a decoding unit incorporated into video encoder 100. The decoding unit performs the encoding steps in reverse manner. An inverse quantization and inverse transform unit 130 dequantizes the quantized coefficients and applies an inverse transformation to the dequantized coefficients. In adder 135, the decoded differences are added to the prediction signal to form the locally decoded image.

Due to the quantization, quantization noise is superposed to the reconstructed video signal. Due to the blockwise coding, the superposed noise often has a blocking characteristic, which may be subjectively annoying. In order to reduce the blocking characteristic, a deblocking filter 137 is applied to every reconstructed macroblock. The deblocking filter is applied on the reconstructed signal, which is the sum of the prediction signal and the quantized prediction error signal. The deblocked signal is the decoded signal, which is generally displayed. The deblocking filter in H.264/AVC has the capability of local adaptation. In the case of a high degree of blocking noise, a strong low pass filter is applied whereas for a low degree of blocking noise, a weak low pass filter is applied. The strength of the low pass filter is determined by the prediction and by the quantized prediction error signal. This deblocking filter has the following two benefits:

1. Block edges are smoothed resulting in an improved subjective quality of decoded images.

2. Since the filtered macroblock is used for the motion-compensated prediction of further images, the filtering may result in smaller prediction errors and thus in improved coding efficiency.

Intra-coded macroblocks are a specific case in this context; they are filtered before displaying, but intra prediction is carried out using the unfiltered reconstructed macroblocks.

As an example for deblocking at a vertical block boundary, a linear deblocking filter with four coefficients is provided. This filter is applied to input samples $p_2$, $p_1$, $p_0$, $q_0$, $q_1$ and $q_2$, wherein $p_0$ and $q_0$ are two adjacent pixels at the block boundary, $p_1$ and $q_1$ pixels adjacent to $p_0$ and qo, and so on. The filter output $p_{0,new}$ and $q_{0,new}$ is then defined as $p_{0,new} = (p_2 - (p_1 << 1) + (p_0 + q_0 + 1) >> 1) >> 1$ and $q_{0,new} = (q_2 - (q_1 << 1) + (q_0 + p_0 + 1) >> 1) >> 1$.

The type of prediction that is employed by video encoder 100 depends on whether the macro blocks are encoded in "Intra" or "Inter" mode. In "Intra" mode the video encoding standard H.264/AVC uses a prediction scheme based on already encoded macro blocks of the same image in order to predict subsequent macro blocks. In "Inter" mode, motion compensated prediction between corresponding blocks of several consecutive frames is employed.

Only Intra-encoded images (I-type 'images) can be decoded without reference to any previously decoded image. The I-type images provide error resilience for the encoded video sequence. Further, entry points into bit streams of encoded data are provided by the I-type images in order to enable a random access, i.e. to access I-type images within the sequence of encoded video images. A switch between Intra-mode, i.e. a processing by Intra-frame prediction unit 150, and Inter-mode, i.e. a processing by motion compensated prediction unit 160, is controlled by Intra/Inter switch 180.

In "Inter" mode, a macro block is predicted from corresponding blocks of previous frames by employing motion compensated prediction. The estimation is accomplished by a motion estimator unit 170, receiving the current input signal and the locally decoded image. Motion estimation yields two-dimensional motion vectors, representing displacements between the current block and the corresponding block in already decoded frames. Based on the estimated motion, a motion compensated prediction unit 160 provides a prediction signal.

In order to optimize prediction accuracy, motion vectors may be determined at sub-pel resolution, e.g. half-pel or quarter-pel resolution. A motion vector with sub-pel resolution may point to a position within an already decoded frame where no pixel value is available, i.e. a sub-pel position. Hence, spatial interpolation of pixel values is needed in order to perform motion compensation. This is achieved by interpolation filter 162. According to the H.264/AVC standard, a 6-tap Wiener interpolation filter with fixed filter coefficients and a bilinear filter is applied in order to obtain pixel values for sub-pel positions.

For both the "Intra" and the "Inter" encoding mode, the differences between the current input signal and the prediction signal are transformed and quantized by a transform/quantization unit 120 resulting in quantized coefficients. Generally, an orthogonal transformation such as a two-dimensional Discrete Cosine transformation (DCT) or an integer version thereof is employed.

The coefficients are quantized in order to reduce the amount of data that has to be encoded. The step of quantization is controlled by quantization tables that specify the precision and therewith the number of bits that are used to encode each frequency coefficient. Lower frequency components are usually more important for image quality than high frequency components so that more bits are spent for coding the low frequency components than for the higher ones.

After quantization, the two-dimensional array of quantized coefficients has to be converted into a one-dimensional string to pass it to the entropy encoder. This conversion is done by scanning the array in a predetermined sequence. The thus obtained one-dimensional sequence of quantized coefficients is compressed and coded by an entropy coding unit 190 by means of a variable length code (VLC). The resulting bitstream is multiplexed with the motion information and stored on a recording medium or transmitted to the decoder side.

In order to improve the subjective image quality, a so-called post filter may be applied at the decoder side. The standard H.264/AVC allows sending of post filter information for such a post filter by the use of an SEI (Supplemental Enhancement Information) message. The post filter information may be either the filter coefficients themselves or cross-correlation information which can be used to calculate the filter coefficients. The post filter information is determined on the encoder side by means of a post filter design unit 138, which compares the locally decoded signal and the original input signal. The output of the post filter design unit 138 is also fed to the entropy coding unit 190 in order to be encoded and inserted into the encoded signal.

For reconstructing the encoded images at the decoder side, the encoding process is applied in reverse manner. A schematic block diagram, illustrating the configuration of the corresponding decoder, is shown in Fig. 2.

In decoder 101 of Fig. 2, first the entropy encoding of coefficients and motion data is reversed in an entropy decoding unit 191. This step also involves an inverse scanning in order to convert the string of decoded coefficients into a two-dimensional array of data as it is required for the inverse transform. The decoded block of quantized coefficients is then submitted to an inverse quantizer and inverse transform unit 121 and the decoded motion data is sent to a motion compensated prediction unit 160. Depending on the actual value of the motion vector, interpolation of pixel values may be needed in order to perform the motion compensated prediciton. This interpolation is performed by interpolation filter 162.

The result of the inverse transform is the quantized prediction error in the spatial domain, which is added by adder 135 to the prediction signal stemming from the motion compensated prediction unit 160 in Inter-mode or stemming from an Intra-frame prediction unit 150 in Intra-mode. The reconstructed image may be passed through a deblocking filter 137 and the resulting decoded signal is stored in memory 140 to be applied to prediction units 150, 160.

The entropy decoding unit 191 is also retrieving the post filter information determined by the encoder. The post filter unit 139 employs this information in order to set up a post filter that is applied to the decoded signal in order to further improve image quality.

The above described conventional post filter is an example of an adaptive filter, namely of a filter that is adapted to the properties of the video signal that is to be encoded. Many implementations of such an adaptive filter are based on Wiener filters, i.e. on linear optimum time-discrete filters. Wiener filters are generally applied in order to get rid of additive noise. In the context of video coding, the quantization error can be considered as noise superimposed on the original video input signal.

One of the advantages of the Wiener filter approach is that the filter coefficients can be determined from the auto-correlation of the corrupted signal (decoded video signal) and the cross-correlation of the corrupted signal and the desired signal (original video input signal). More specifically, if $R$ denotes the $MxM$ autocorrelation matrix of the corrupted signal and $p$ denotes the $Mx1$ cross-correlation vector between the corrupted signal and the desired signal, wherein $M$ is the length of the Wiener filter, then the $Mx1$ vector of optimum Wiener filter coefficients $W$ is given as

$$w = R^{-1} \cdot p , \qquad (1)$$

wherein $R^{-1}$ is the inverse of the autocorrelation matrix $R$.

From reference EP 1 841 230 A, for instance, it is known to apply adaptive filters within the prediction loop, namely to the reconstructed signal directly before or instead of the deblocking filter 137, to the output of the deblocking filter, or to the prediction signal. The purpose of these conventional video filters is to minimize the mean squared prediction error and/or the mean squared reconstruction error and/or to deblock the image so as to enhance subjective picture quality.

## SUMMARY OF THE INVENTION

The aim of the present invention is to provide methods for video coding with improved coding efficiency and corresponding apparatuses.

This is achieved by the features as set forth in the independent claims.

Preferred embodiments are the subject matter of dependent claims.

It is the particular approach of the present invention to replace a conventional adaptive filter operating on the reconstructed signal by two filters operating on the prediction signal and the quantized prediction error signal, respectively, which are individually adapted to the statistical properties of their respective input signals.

According to a first aspect of the present invention, a method for encoding a video signal is provided. The method is based on differential pulse code modulation and comprises the steps of computing a prediction signal and an error signal from the video signal to be encoded, and is characterized by obtaining first filter information indicating a first filter adapted to statistical properties of the prediction signal, obtaining second filter information indicating a second filter adapted to statistical properties of the error signal, and encoding the first filter information and the second filter information.

According to a further aspect of the present invention, a method for decoding a video signal is provided. Said method is based on differential pulse code modulation and comprises the steps of obtaining a prediction signal and an error signal, and computing a reconstructed signal from the prediction signal and the error signal, and is characterized by decoding first filter information and second filter information, setting a first filter and a second filter in accordance with the first filter information and the second filter information, respectively; and filtering the prediction signal and the error signal by the first filter and the second filter, respectively, wherein the reconstructed signal is computed by adding the filtered prediction signal and the filtered error signal.

According to a further aspect of the present invention, an apparatus for encoding a video signal is provided. Said apparatus comprises a differential pulse code modulation unit for computing a prediction signal and an error signal from the video signal to be encoded and is characterized by a filter design unit for obtaining first filter information indicating a first filter adapted to statistical properties of the prediction signal and for obtaining second filter information indicating a second filter adapted to statistical properties of the error signal, and an encoder for encoding the first filter information and the second filter information.

According to a further aspect of the present invention, an apparatus for decoding a video signal is provided. Said apparatus is based on differential pulse code modulation and comprises a reconstruction means for obtaining a prediction signal and an error signal and for computing a reconstructed signal from the prediction signal and the error signal, and is characterized by a decoder for decoding first filter information and second filter information, a first filter set in accordance with the first filter information for filtering the prediction signal, and a second filter set in accordance with the second filter information for filtering the error signal, wherein the reconstruction means is adapted for computing the reconstructed signal by adding the filtered prediction signal and the filtered error signal.

In a preferred embodiment of the encoding method or apparatus, the first filter information and the second filter information are obtained by minimizing a measure indicating a difference between the video signal to be encoded and a reconstructed signal, said reconstructed signal being the sum of the prediction signal filtered by the first filter and the error signal filtered by the second filter.

In another preferred embodiment of the encoding method or apparatus, the first filter information is obtained by analyzing statistical properties of the prediction signal and the video signal to be encoded, and the second filter information is obtained by analyzing statistical properties of the error signal and the video signal to be encoded.

In another preferred embodiment of the encoding method or apparatus, the present invention is applied to post-filtering, wherein the inventive post filter is operating on the prediction signal, the error signal, and the decoded signal. To this end, the prediction signal and the error signal are added, a predetermined filter is applied to the result of the addition, third filter information indicating a third filter adapted to statistical properties of a signal resulting from the step of applying the predetermined filter is obtained; and the third filter information is also encoded. Preferably, the predetermined filter is a deblocking filter.

In a corresponding preferred embodiment of the decoding method or apparatus, the prediction signal and the error signal are added, a predetermined filter is applied to the results of the addition, third filter information is decoded, a third filter is set in accordance with the third filter information, and the third filter is applied to an output signal of the predetermined filter, wherein the reconstructed signal is computed by adding the filtered prediction signal, the filtered error signal, and an output signal of the third filter.

In another preferred embodiment of the encoding method or apparatus, the present invention is applied to post-filtering, wherein the inventive post filter is operating on the prediction signal, the error signal, and the output signal of a conventional post filter. To this end, the prediction signal and the error signal are added, a predetermined filter is applied to the results of the adding step; post filter information based on statistical properties of a signal resulting from the step of applying the predetermined filter is obtained, a post filter is set in accordance with the post filter information, the post filter is applied to a signal resulting from the step of applying the predetermined filter, third filter information indicating a third filter adapted to statistical properties of a signal resulting from the step of applying the post filter is obtained, and the third filter information and the post filter information are also encoded.

In a corresponding preferred embodiment of the decoding method or apparatus, the prediction signal and the error signal are added, a predetermined filter is applied to the results of the addition, post filter information and third filter information are decoded, a post filter and a third filter are set in accordance with the post filter information and the third filter information, respectively, the post filter is applied to an output signal of the predetermined filter, and the third filter is applied to an output signal of the post filter, wherein the reconstructed signal is computed by adding the filtered prediction signal, the filtered error signal, and an output signal of the third filter.

In a preferred embodiment of both the encoding and decoding method or apparatus, the present invention is applied as a loop filter. To this end, the filtered prediction signal and the filtered error signal are added, and a result of the addition is delayed, wherein the prediction signal is obtained from the delayed results.

In another preferred embodiment of both the encoding and decoding method or apparatus, the present invention is applied to adaptive interpolation filtering for motion compensated prediction with sub-pel precision. To this end, the prediction signal is delayed, wherein the first filter is applied to the delayed prediction signal, the error signal is delayed, wherein the second filter is applied to the delayed error signal, and the filtered delayed prediction signal and the filtered delayed error signal are added, wherein the prediction signal is obtained from a result of the addition.

Preferably, the first filter information, the second filter information, and the third filter information comprise filter coefficients of the first filter, the second filter, and the third filter, respectively. In this manner, the computational load for the decoder can be reduced, because the decoder can easily set up the respective filters without any further computation.

Preferably, the first filter information and the second filter information comprise an indication of statistical properties of the prediction signal and the error signal, respectively. In this manner, the computational load for the encoder can be reduced, because the decoder is taking care of setting up the respective filters in accordance with the statistical properties determined by the encoder. Further, the the decoder is provided with greater flexibility for adapting the filters to its particular needs.

Preferably, the first filter and the second filter are Wiener filters. Wiener filters are well-studied examples of linear optimum filters that can readily be determined from statistical properties of their input signal and the desired output signal.

The above and other objects and features of the present invention will become more apparent from the following description and preferred embodiments given in conjunction with the accompanying drawings, in which:

Fig. 1 is a block diagram of a conventional video encoder;

Fig. 2 is a block diagram of a conventional video decoder;

Fig. 3 is a block diagram of a video encoder according to a first embodiment of the present invention;

Fig. 4 is a block diagram of a video decoder according to a first embodiment of the present invention;

Fig. 5 is a block diagram of a video encoder according to a second embodiment of the present invention;

Fig. 6 is a block diagram of a video decoder according to a second embodiment of the present invention;

Fig. 7 is a block diagram of a video encoder according to a third embodiment of the present invention;

Fig. 8 is a block diagram of a video decoder according to a third embodiment of the present invention;

Fig. 9 is a block diagram of a video encoder according to a fourth embodiment of the present invention;

Fig. 10 is a block diagram of a video decoder according to a fourth embodiment of the present invention; and

Fig. 11 shows rate distortion curves for two different MPEG test sequences.

## DETAILED DESCRIPTION

In the conventional video coding schemes, filtering is applied in order to minimize the mean squared prediction error and/or the mean squared reconstruction error and/or to deblock an image to enhance subjective picture quality. To this end, an adaptive filter is applied to the reconstructed image signal, which is the sum of the prediction signal and the quantized prediction error signal.

This form of filtering, however, is only efficient, if the prediction signal and the quantized prediction error signal have the same statistics. In case that the prediction signal and the quantized prediction error signal have different statistics, such as different superimposed noise, the filter design is disadvantageous in the sense that it cannot account for the different statistics.

There are several possible reasons for the statistics of the prediction signal and the quantized prediction error signal being different. First, quantization noise is superimposed only to the prediction error during the quantization step but not to the prediction signal itself at a certain time instance. The prediction signal may contain quantization noise from a different time instance and may thus have a different statistics. Second, since the block edges in the motion compensated prediction may be different from the block edges in the prediction error coding, the blocking characteristic is different in the prediction signal as compared to the quantized prediction error signal.

According to the present invention, the prediction signal and the quantized prediction error signal are considered separately in the filter process.

The H.264/AVC standard specifies two filter schemes (interpolation filter and deblocking filter) as well as the possibility to transmit post filter hints to a decoder according to a specific post-filter scheme (post-filter hint SEI message). The following embodiments of the present invention will show how each of the three schemes is improved by applying this invention.

## (FIRST EMBODIMENT)

Fig. 3 shows a block diagram of a video encoder according to a first embodiment of the present invention. The block diagram of Fig. 3 is similar to that of the conventional video encoder shown in Fig. 1, wherein like components are denoted by like reference numerals. A repetition of the detailed description of these components will be omitted.

The video encoder according to the first embodiment of the present invention differs from the conventional video encoder in the configuration of the post filter design unit. In contrast to the conventional post filter design unit 138, the new post filter design unit 138' receives the prediction signal and the quantized prediction error signal in addition to the original input signal. In this manner, the new post filter design unit 138' may take different statistical properties of the prediction signal and the quantized prediction error signal into account when determining optimum filters for filtering the prediction signal and the quantized prediction error signal.

Specifically, the new post filter design unit 138' may compute autocorrelation functions of the prediction signal and the quantized prediction error signal, the cross-correlation function between the prediction signal and the input signal, as well as the cross-correlation function between the quantized prediction error signal and the input signal, in order to determine an optimum filter for each of the prediction signal and the quantized prediction error signal. In other words, the new post filter design unit 138' may apply a Wiener approach in order to determine filters that minimize a difference, i.e. the mean squared error, between the original signal to be encoded and the output of the new post filter 139'. A result of this determination is fed as a post filter information to the entropy coding unit 190 in order to be inserted into the encoded video data. The post filter information may comprise a set of filter coefficients for each of the two filters, the coefficients of the autocorrelation matrices and the cross-correlation vectors, or any other information that allows the decoder to set up appropriate filters. In this context it is also noted that the autocorrelation functions of the prediction signal and the quantized prediction error signal may also be computed on the decoder side so that only the cross-correlation functions between these signals and the input signal need to be transmitted.

As a specific example, the computation of filter coefficients of the new post filter 139' is detailed here below.

The output of the new post filter 139' may be expressed as

$$s' = \sum_{i=1}^{M} w_i \cdot p_i + \sum_{i=1}^{N} w_{M+i} \cdot e_i \,, \tag{2}$$

wherein $w_1,...,w_M$ are $M$ filter coefficients of the first filter (139-1) applied to $M$ prediction samples $p_1,...,p_M$ and $w_{M+1},...,w_{M+N}$ are $N$ filter coefficients of the second filter (139-2) applied to $N$ samples $e_1,...,e_M$ of the quantized prediction signal.

Applying the Wiener-Hopf equation, the filter coefficients that minimize the mean squared error between the desired signal $s$ and the filtered signal $s^1$, can be determined by

$$\begin{pmatrix} w_1 \\ \vdots \\ w_M \\ w_{M+1} \\ \vdots \\ w_{M+N} \end{pmatrix} = \begin{pmatrix} E[p_1 p_1] & \cdots & E[p_1 p_M] & E[p_1 e_1] & \cdots & E[p_1 e_N] \\ \vdots & & & & & \vdots \\ E[p_m p_1] & \cdots & E[p_m p_M] & E[p_m e_1] & \cdots & E[p_m e_N] \\ E[e_1 p_1] & \cdots & E[e_1 p_M] & E[e_1 e_1] & \cdots & E[e_1 e_N] \\ \vdots & & & & & \vdots \\ E[e_N p_1] & \cdots & E[e_N p_M] & E[e_N e_1] & \cdots & E[e_N e_N] \end{pmatrix}^{-1} \begin{pmatrix} E[p_1 s] \\ \vdots \\ E[p_M s] \\ E[e_1 s] \\ \vdots \\ E[e_N s] \end{pmatrix}, \tag{3}$$

wherein $E[\cdot]$ denotes the expected value. Hence, the filter coefficients $w_1,...,w_{M+N}$ are determined by the autocorrelation of the prediction signal, the autocorrelation of the error signal, the cross-correlation of prediction and error signal, the cross correlation of prediction signal and desired signal, and the cross-correlation of error signal and desired signal. In case that prediction signal and error signal are statistically independent, the above equation is block-diagonal and the filter coefficients of the first (second) filter are determined by the autocorrelation of the prediction (error) signal and the cross correlation of prediction (error) signal and desired signal only.

The present invention is not limited to the above method for computing the filter coefficients. Instead, a numerical optimization may be performed in order to determine filter coefficients that minimize a predetermined measure indicating a difference between the filtered signal and the desired signal. Such a measure may, for instance, comprise a weighted sum of absolute pixel differences, wherein the pixels located close to a block boundary are weighted stronger than those at the block center in order to reduce blocking artifacts in the output.

In a preferred embodiment, the new post filter design unit 138' may also receive the decoded signal, namely the output of the deblocking filter 137, as an input (cf. the dashed line in Fig. 3). In this manner, the new post filter design unit 138' may determine filter information for a third filter in accordance with statistical properties of the decoded signal and the original input signal. This filter information is also conveyed to the decoder along with the filter information for the prediction signal and the quantized prediction error signal. The decoder may thus set up a third filter, which is directly operating on the decoded signal, as will be explained in greater detail in connection with Fig. 4.

In this preferred embodiment, the output of the new post filter 139' may be expressed in analogy to Eq. (2) as

$$s'=\sum_{i=1}^{M} w_i \cdot p_i + \sum_{i=1}^{N} w_{M+i} \cdot e_i + \sum_{i=1}^{L} w_{M+N+i} \cdot d_i \,, \qquad (4)$$

wherein $w_{M+N+1},\ldots, w_{M+N+L}$ are $L$ filter coefficients of the third filter (139-3) applied to $L$ samples $d_1,\ldots, d_L$ of the decoded signal.

Similar as above, the filter coefficients that minimize the mean squared error between the desired signal s and the filtered signal $s'$, can be determined by

$$\begin{pmatrix} w_1 \\ \vdots \\ w_M \\ w_{M+1} \\ \vdots \\ w_{M+N} \\ w_{M+N+1} \\ \vdots \\ w_{M+N+L} \end{pmatrix} = \begin{pmatrix} \underline{E}[p_i p_j] & \underline{E}[p_i e_j] & \underline{E}[p_i d_j] \\ \underline{E}[e_i p_j] & \underline{E}[e_i e_j] & \underline{E}[e_i d_j] \\ \underline{E}[d_i p_j] & \underline{E}[d_i e_j] & \underline{E}[d_i d_j] \end{pmatrix}^{-1} \begin{pmatrix} E[p_1 s] \\ \vdots \\ E[p_M s] \\ E[e_1 s] \\ \vdots \\ E[e_N s] \\ E[d_1 s] \\ \vdots \\ E[d_N s] \end{pmatrix}, \qquad (5)$$

wherein $\underline{E}[x_i y_j]$ denotes the sub-matrix consisting of all cross-correlation terms between $x$ and $y$.

Fig. 4 shows a block diagram of a video decoder according to the first embodiment of the present invention. The block diagram of Fig. 4 is similar to that of the conventional video decoder shown in Fig. 2, wherein like components are denoted by like reference numerals. A repetition of the detailed description of these components will be omitted.

The video decoder according to the first embodiment of the present invention differs from the conventional video decoder in the configuration of the post filter 139. The new post filter 139' comprises at least two independent filters, one filter 139-1 for filtering the prediction signal that is output from the prediction units 150 or 160, and one filter 139-2 for filtering the quantized prediction error signal that is output from inverse quantization and transform unit 121. The output of these filters is combined by means of adder 139-0 and provided as the final output signal of the decoder 101.

In a manner similar to the conventional post filter, the new post filter 139' receives post filter information derived from the input signal by means of the entropy decoder 191. In contrast to the decoder, the post filter information is employed to set up at least two different filters, namely filter 139-1 for the prediction signal and filter 139-2 for the quantized prediction error signal.

As indicated by dashed lines in Fig. 4, the new post filter may also comprise a third filter 139-3 that is operating on the decoded signal output by the deblocking filter 137. In a manner similar to that of filters 139-1 and 139-2, filter 139-3 is also set up in accordance with the filter information provided by the entropy decoder, i.e., in accordance with statistical properties of the decoded signal and the original video signal determined on the encoder side.

As explained above in connection with the encoder of Fig. 3, the post filter information may comprise a set of filter coefficients for each of these filters, the coefficients of the relevant autocorrelation matrices and cross-correlation vectors, or any other information that allows the decoder to set up appropriate filters.

In accordance with the first embodiment of the present invention, post filtering of decoded video information is performed by means of at least two independently optimized filters operating on the prediction signal, the quantized prediction error signal, and - optionally - on the output of the deblocking filter. The output of the separate filters is added in order to form the final output signal of the decoder. In this manner, each of these filters may be adapted to the statistical properties of the signal it is operating on. In this manner, the reconstruction error can be reduced more efficiently than with a single filter operating on the reconstructed signal only.

(SECOND EMBODIMENT)

Fig. 5 shows a block diagram of a video encoder according to a second embodiment of the present invention.

The block diagram of Fig. 5 is similar to that of the conventional video encoder shown in Fig. 1, wherein like components are denoted by like reference numerals. A repetition of the detailed description of these components will be omitted.

The video encoder according to the second embodiment of the present invention differs from the conventional video encoder by the post filter 139 and the additional post filter design unit 138'.

In a manner similar to the conventional video encoder, the post filter design unit 138 of Fig. 5 determines an optimum filter that is to be applied as a post filter to the decoded signal output by the deblocking filter of a video decoder. Such a post filter is also part of the video encoder according to the present embodiment. The output of this post filter is fed to the additional post filter design unit 138', which also receives the prediction signal, the quantized prediction error signal, and the original video signal as an input. Based on the statistical properties of its input signals, the additional post filter design unit determines filter information for three independent filters operating on the prediction signal, the quantized prediction error signal, and the output signal of the post filter 139. The thus determined filter information is fed to the entropy coder 190 in order to be inserted into the encoded signal.

Specifically, the additional post filter design unit 138' may compute autocorrelation functions of the prediction signal, the quantized prediction error signal, and the post-filtered signal, as well as the cross-correlation functions between these signals and the input signal, in order to determine an optimum filter for each of the prediction signal, the quantized prediction error signal, and the post-filtered signal. A result of this determination is fed as additional post filter information to the entropy coding unit 190 in order to be inserted into the encoded video data. The post filter information may comprise a set of filter coefficients for each of the three filters, the coefficients of the autocorrelation matrices and the cross-correlation vectors, or any other information that allows the decoder to set up appropriate filters. In this context it is also noted that the autocorrelation functions of the prediction signal, the quantized prediction error signal, and the post-filtered signal may also be computed on the decoder side so that only the cross-correlation functions between these signals and the input signal need to be transmitted.

Fig. 6 shows a block diagram of a video decoder according to the second embodiment of the present invention. The block diagram of Fig. 6 is similar to that of the conventional video decoder shown in Fig. 2, wherein like components are denoted by like reference numerals. A repetition of the detailed description of these components will be omitted.

The video decoder according to the second embodiment of the present invention differs from the conventional video decoder by the additional post filter 139', which receives the prediction signal, the quantized prediction error signal and the output of the post filter 139 as an input. The additional post filter 139' comprises three independent filters, one filter 139-1 for filtering the prediction signal that is output from the prediction units 150 or 160, one filter 139-2 for filtering the quantized prediction error signal that is output from inverse quantization and transform unit 121, and one filter 139-3 for filtering the post-filtered signal output from post filter 139. The output of these filters is combined by means of adder 139-0 and provided as the final output signal of the decoder 101.

As explained above in connection with the encoder of Fig. 5, the post filter information may comprise a set of filter coefficients for each of these filters, the coefficients of the relevant autocorrelation matrices and cross-correlation vectors, or any other information that allows the decoder to set up appropriate filters.

In accordance with the second embodiment of the present invention, post filtering of decoded video information is performed by means of three independently or jointly optimized filters operating on the prediction signal, the quantized prediction error signal, and the output of the (conventional) post filter. The output of the separate filters is added in order to form the final output signal of the decoder. Each of these filters may be adapted to the statistical properties of the signal it is operating on. In this manner, the reconstruction error can be reduced more efficiently than with a single filter operating on the reconstructed signal only. Moreover, the encoded signal generated by an encoder of the present embodiment is compatible to conventional decoders who may simply ignore the additional post filter information. Decoders that are aware of the additional post filtering, however, may employ this information for setting up the additional post filter in order to further improve image quality.

(THIRD EMBODIMENT)

Fig. 7 shows a block diagram of a video encoder according to a third embodiment of the present invention. The block diagram of Fig. 7 is similar to that of the conventional video encoder shown in Fig. 1, wherein like components are denoted by like reference numerals. A repetition of the detailed description of these components will be omitted.

The video encoder according to the third embodiment of the present invention differs from the conventional video encoder in that the adder 135 and the deblocking filter 137 are replaced by a new loop filter 137' and a corresponding new loop filter design unit 138'.

The new loop filter design unit 138' receives the original input signal, the prediction signal, and the quantized prediction error signal as an input. In manner similar to the new post filter design unit of the first embodiment, the new loop filter design unit 138' analyzes the statistical properties of its input signals and feeds new loop filter information to the new loop filter 137' and the entropy coder 190.

The new loop filter 137' comprises a first filter 137-1 operating on the prediction signal, a second filter 137-2 operating on the quantized prediction error signal, and an adder 137-0 for adding the filtered signals. The first and the second filter are set up in accordance with the new loop filter information received from the new loop filter design unit as described above in conjunction with the previous embodiments.

Specifically, the first filter 137-1 and the second filter 137-2 may be optimized so that a difference measure, such as the mean squared error, between the signal to be encoded and the reconstructed signal, i.e., the output of the new loop filter, is minimized.

Depending on how the filters 137-1 and 137-2 are set up, the new loop filter is operating as a proper loop filter (both filters are operating on all pixels of a given block) or as a deblocking filter (both filters are predominantly operating on pixels close to a block boundary). Especially in the former case, the encoder may additionally be equipped with a conventional deblocking filter (not shown), which receives input from the new loop filter 137' and feeds its output to the memory unit 140 and the post filter design unit 138.

Fig. 8 shows a block diagram of a video decoder according to the third embodiment of the present invention. The block diagram of Fig. 8 is similar to that of the conventional video decoder shown in Fig. 2, wherein like components are denoted by like reference numerals. A repetition of the detailed description of these components will be omitted.

The video decoder according to the third embodiment of the present invention differs from the conventional video decoder by the new loop filter 137', which replaces the adder 135 and the conventional deblocking filter 137. The configuration of the new loop filter 137', however, is identical to the corresponding configuration of the encoder shown in Fig. 7. Specifically, the new loop filter 137' comprises a first filter 137-1 operating on the prediction signal, a second filter 137-2 operating on the quantized prediction error signal, and an adder 137-0 for adding the filtered signals. The first and the second filter are set up in accordance with the new loop filter information received from the entropy decoder 191 as described above in conjunction with the previous embodiments. As already mentioned above in the context of the encoder of the present embodiment, the new loop filter 137' of the decoder may also be followed by a conventional deblocking filter (not shown).

In accordance with the third embodiment of the present invention, an adaptive loop filter is provided that comprises two jointly or independently optimized filters operating on the prediction signal and the quantized prediction error signal, respectively. In this manner, the loop filter may take different statistical properties of these signals into account. Therefore, the reconstruction error can be reduced more efficiently than with a single loop filter operating on the reconstructed signal only. Moreover, due to the reduction of the reconstruction error, coding efficiency is improved.

(FOURTH EMBODIMENT)

Fig. 9 shows a block diagram of a video encoder according to a fourth embodiment of the present invention. The block diagram of Fig. 9 is similar to that of the conventional video encoder shown in Fig. 1, wherein like components are denoted by like reference numerals. A repetition of the detailed description of these components will be omitted.

In the fourth embodiment, the present invention is applied to adaptive interpolation filtering for motion compensated prediction. The video encoder according to this embodiment differs from the conventional video encoder in that the interpolation filter 162 is replaced by a new interpolation filter and design unit 162' and that there are two memory units 140, 140' in order to store the prediction signal and the quantized prediction error signal separately, as well as two deblocking filters 137, 137' in order to perform deblocking of the prediction signal and the quantized prediction error signal independently of each other.

As an aside it is noted that since the dynamic range of the quantized prediction error is usually larger than the dynamic range of the prediction signal, the memory to store the quantized prediction error may be of higher bit depth than the one to store the prediction signal. In certain situations it may be beneficial to decrease the dynamic range of the quantized prediction error signal in order to get a lower bit depth. This may by done by an additional quantization of the quantized prediction error signal.

The new interpolation filter and design unit 162' of Fig. 9 comprises a first filter 162-1 operating on the prediction signal delayed by means of memory unit 140, a second filter 162-2 operating on the quantized prediction error signal delayed by means of memory unit 140', and an adder 162-0 for adding the two filtered signals. As described above, the first and the second filter are optimized so as to minimize a distance measure between the output of the adder 162-0 and the desired signal. In the case of motion compensated prediction, the desired signal is the original video input at a different point of time. A result of this optimization process is fed as new interpolation filter information to the entropy coder 190 in order to be inserted into the output signal.

Fig. 10 shows a block diagram of a video decoder according to the fourth embodiment of the present invention. The block diagram of Fig. 10 is similar to that of the conventional video decoder shown in Fig. 2, wherein like components are denoted by like reference numerals. A repetition of the detailed description of these components will be omitted.

The video decoder according to the fourth embodiment of the present invention differs from the conventional video decoder in that the interpolation filter 162 is replaced by a new interpolation filter 162' and that there are two memory units 140, 140' in order to store the prediction signal and the quantized prediction error signal separately, as well as two deblocking filters 137, 137' in order to perform deblocking of the prediction signal and the quantized prediction error signal independently of each other.

Similar to the configuration of the corresponding encoder shown in Fig. 9, the encoder is provided with a new loop filter 137', which comprises a first filter 137-1 operating on the prediction signal, a second filter 137-2 operating on the quantized prediction error signal, and an adder 137-0 for adding the filtered signals. The first and the second filter are set up in accordance with the new interpolation filter information received from the entropy decoder 191 as described above in conjunction with the previous embodiments.

In accordance with the fourth embodiment of the present invention, an adaptive interpolation filter for motion compensated prediction at sub-pel precision is provided. The inventive interpolation filter comprises two jointly or independently optimized filters operating on the (delayed) prediction signal and the (delayed) quantized prediction error signal, respectively. In this manner, the interpolation filter may take different statistical properties of these signals into account. Therefore, the prediction error can be reduced more efficiently than with a conventional adaptive interpolation filter operating on the (delayed) decoded signal only. Hence, coding efficiency can be improved accordingly.

Fig. 11 shows rate distortion curves for two different MPEG test sequences, illustrating the effect of the present invention. The rate distortion curves are based on the first embodiment, having an additional post filter with $M = N = L = 1$. In the diagrams of Fig. 11, the Y-PSNR of the luminance component is plotted versus the required bit rate for two different MPEG test sequences. The invented scheme is compared to H.264/AVC using a non-separable two-dimensional Wiener post filter with 5x5 coefficients. Intra coding is applied for this comparison. An increase of the Y-PSNR of up to 0.3 dB can be observed with this invention.

In the above embodiments of the present invention, the inventive video filter comprises filters operating on the prediction signal and the (quantized prediction) error signal. However, each pair of signal selected out of the set of the prediction signal, the error signal, and the reconstructed signal (the sum of the prediction and the error signal) is linearly independent. Therefore, the present invention may also be applied to a combination of the reconstructed signal and the (quantized prediction) error signal or the reconstructed signal and the prediction signal.

Further, the present invention is not restricted to whether a filter is fixed or adaptive. Any filter of the invented filter scheme may contain either fixed or adaptive filters. In the case of adaptive filters, filter information, e.g. coefficients, are coded and sent to the decoder as side information. In the context of the H.264/AVC coding scheme, the filter information, e.g. coefficients, is transmitted in the slice header, in the picture parameter set, or in the sequence parameter set. For the adaptive post filter schemes, the post filter information can also be sent as an SEI (Supplemental Enhancement Information) to the decoder.

It is also to be noted that the present invention can be applied to any conventional coding scheme based on differential pulse code modulation, including coding schemes for video and non-video, e.g. audio data. Moreover, the present invention may also be applied to the spatial scalable video coding scheme of H.264/AVC, in which reconstructed images of a low spatial resolution, consisting of a prediction signal and a quantized prediction error signal, are upsampled and interpolated with one filter resulting in images of a high spatial resolution. In the context of spatial scalable video coding, the prediction signal and the quantized prediction error signal could be considered separately, for example by different filter coefficients for each signal. It is also possible to apply this invention in the context of high frequency modeling. In this context, this invention offers to use the statistics of the prediction signal and of the quantized prediction error signal individually for the filtering and for the adjustment of the higher order statistics.

Further, the present invention is not restricted to Wiener filters, but may also be applied to other adaptive filters such as non-linear adaptive filters based on a Volterra series expansion, filters that optimize a measure other than the mean squared error between the corrupted signal and the desired signal, and so on.

Finally, the various embodiments of the present invention may be combined, such that, for instance, two independently optimized filters are employed for post filtering in accordance with the first embodiment while another two independently optimized filters are employed as a loop filter in accordance with the third embodiment. Similar combinations of the other embodiments are also feasible.

Summarizing, the present invention relates to optimum filters in the context of video coding based on differential pulse code modulation. It is the particular approach of the present invention to provide two filters that operate independently of each other on the prediction signal and the (quantized prediction) error signal, rather than a single filter operating on the reconstructed signal, i.e., the sum of the prediction signal and the error signal. In this manner, different statistical properties of the prediction signal and the error signal can be taken into account, resulting in improved coding efficiency due to lower prediction and/or reconstruction errors.

## Claims

1. A method for encoding a video signal, said method being based on differential pulse code modulation and comprising the steps of:

computing a prediction signal and an error signal from the video signal to be encoded;
**characterized by**
obtaining (138') first filter information indicating a first filter (137-1; 139-1; 162-1) adapted to statistical properties of the prediction signal;
obtaining (138') second filter information indicating a second filter (137-2; 139-2; 162-2) adapted to statistical properties of the error signal; and
encoding (190) the first filter information and the second filter information.

**2.** A method according to claim 1, wherein the first filter information and the second filter information are obtained by minimizing a measure indicating a difference between the video signal to be encoded and a reconstructed signal, said reconstructed signal being the sum of the prediction signal filtered by the first filter (137-1; 139-1; 162-1) and the error signal filtered by the second filter (137-2; 139-2; 162-2).

**3.** A method according to claim 1, wherein the first filter information is obtained by analyzing statistical properties of the prediction signal and the video signal to be encoded; and wherein the second filter information is obtained by analyzing statistical properties of the error signal and the video signal to be encoded.

**4.** A method according to any of claims 1 to 3, further comprising the steps of
adding (135) the prediction signal and the error signal;
applying a predetermined filter (137) to the results of the adding step;
obtaining third filter information indicating a third filter (139-3) adapted to statistical properties of a signal resulting from the step of applying the predetermined filter (137); and
encoding the third filter information.

**5.** A method for decoding a video signal, said method being based on differential pulse code modulation and comprising the steps of:

obtaining a prediction signal and an error signal; and
computing a reconstructed signal from the prediction signal and the error signal,
**characterized by**
decoding (191) first filter information and second filter information;
setting a first filter (137-1; 139-1; 162-1) and a second filter (137-2; 139-2; 162-2) in accordance with the first filter information and the second filter information, respectively; and
filtering the prediction signal and the error signal by the first filter (137-1; 139-1; 162-1) and the second filter (137-2; 139-2; 162-2), respectively,
wherein the reconstructed signal is computed by adding the filtered prediction signal and the filtered error signal.

**6.** A method according to claim 5, further comprising the steps of
adding (135) the prediction signal and the error signal;
applying a predetermined filter (137) to the results of the adding step;
decoding third filter information;
setting a third filter (139-3) in accordance with the third filter information; and
applying the third filter (139-3) to a result of the step of applying the predetermined filter (137), wherein the reconstructed signal is computed by adding the filtered prediction signal, the filtered error signal, and a result of the step of applying the third filter (139-3).

**7.** A method according to any of claims 1 to 3 or 5, further comprising the steps of
adding the filtered prediction signal and the filtered error signal; and
delaying a result of the adding step, wherein the prediction signal is obtained from the delayed results.

**8.** A method according to any of claims 1 to 3 or 5, further comprising the steps of
delaying (140) the prediction signal, wherein the first filter (137-1; 139-1; 162-1) is applied to the delayed prediction signal;
delaying (140') the error signal, wherein the second filter (137-2; 139-2; 162-2) is applied to the delayed error signal; and
adding (137-0) the filtered delayed prediction signal and the filtered delayed error signal, wherein the prediction signal is obtained from a result of the adding step.

**9.** A computer program product comprising a computer readable medium having computer readable program code embodied thereon, the program code being adapted to carry out all steps of any of claims 1 to 8.

**10.** An apparatus for encoding a video signal, said apparatus comprising:

a differential pulse code modulation unit (110, 140, 160) for computing a prediction signal and an error signal from the video signal to be encoded;
**characterized by**
a filter design unit (138') for obtaining first filter information indicating a first filter (137-1; 139-1; 162-1) adapted to statistical properties of the prediction signal and for obtaining second filter information indicating a second filter (137-2; 139-2; 162-2) adapted to statistical properties of the error signal; and
an encoder (190) for encoding the first filter information and the second filter information.

**11.** An apparatus according to any of claims 10 to , further comprising:

an adder (135) for adding the prediction signal and the error signal;
a predetermined filter (137) for filtering an output of the adder (135);
wherein the filter design unit (138') is further adapted for obtaining third filter information indicating a third filter (139-3) adapted to statistical properties of an output signal of the predetermined filter (137); and
wherein the encoder (190) is further adapted for encoding the third filter information.

**12.** An apparatus for decoding a video signal, said apparatus being based on differential pulse code modulation and comprising:

a reconstruction means for obtaining a prediction signal and an error signal and for computing a reconstructed signal from the prediction signal and the error signal,
**characterized by**
a decoder (191) for decoding first filter information and second filter information;
a first filter (137-1; 139-1; 162-1) set in accordance with the first filter information for filtering the prediction signal; and
a second filter (137-2; 139-2; 162-2) set in accordance with the second filter information for filtering the error signal;
wherein the reconstruction means is adapted for computing the reconstructed signal by adding the filtered prediction signal and the filtered error signal.

**13.** An apparatus according to claim 12, further comprising:

an adder (135) for adding the prediction signal and the error signal;
a predetermined filter (137) for filtering an output signal of the adder (135);
a third filter (139-3) set in accordance with third filter information for filtering an output signal of the predetermined filter (137);
wherein the decoder (191) is further adapted for decoding the third filter information; and
wherein the reconstruction means is adapted for computing the reconstructed signal by adding the filtered prediction signal, the filtered error signal, and an output signal of the third filter (139-3).

**14.** An apparatus according to any of claims 10 to or 12, further comprising:

an adder (137-0) for adding the filtered prediction signal and the filtered error signal; and
a delay means (140) for delaying an output signal of the adder (137-0),
wherein the reconstruction means is adapted for obtaining the prediction signal from an out signal of the delay means (140).

**15.** An apparatus according to any of claims 10 to or 12, further comprising:

a delay means (140) for delaying the prediction signal, wherein the first filter (162-1) is applied to the delayed prediction signal;
a delay means (140') for delaying the error signal, wherein the second filter (162-2) is applied to the delayed error signal; and

an adder (162-0) for adding the filtered delayed prediction signal and the filtered delayed error signal, wherein the reconstruction means is adapted for obtaining the prediction signal from an output signal of the adder (162-0).

**16.** A method or apparatus according to any of claims 1 to 15, wherein the first filter information, the second filter information, and the third filter information comprises filter coefficients of the first filter (137-1; 139-1; 162-1), the second filter (137-2; 139-2; 162-2), and the third filter, respectively.

**17.** A method or apparatus according to any of claims 1 to 16, wherein the first filter information and the second filter information comprises an indication of statistical properties of the prediction signal and the error signal, respectively.

Fig. 1

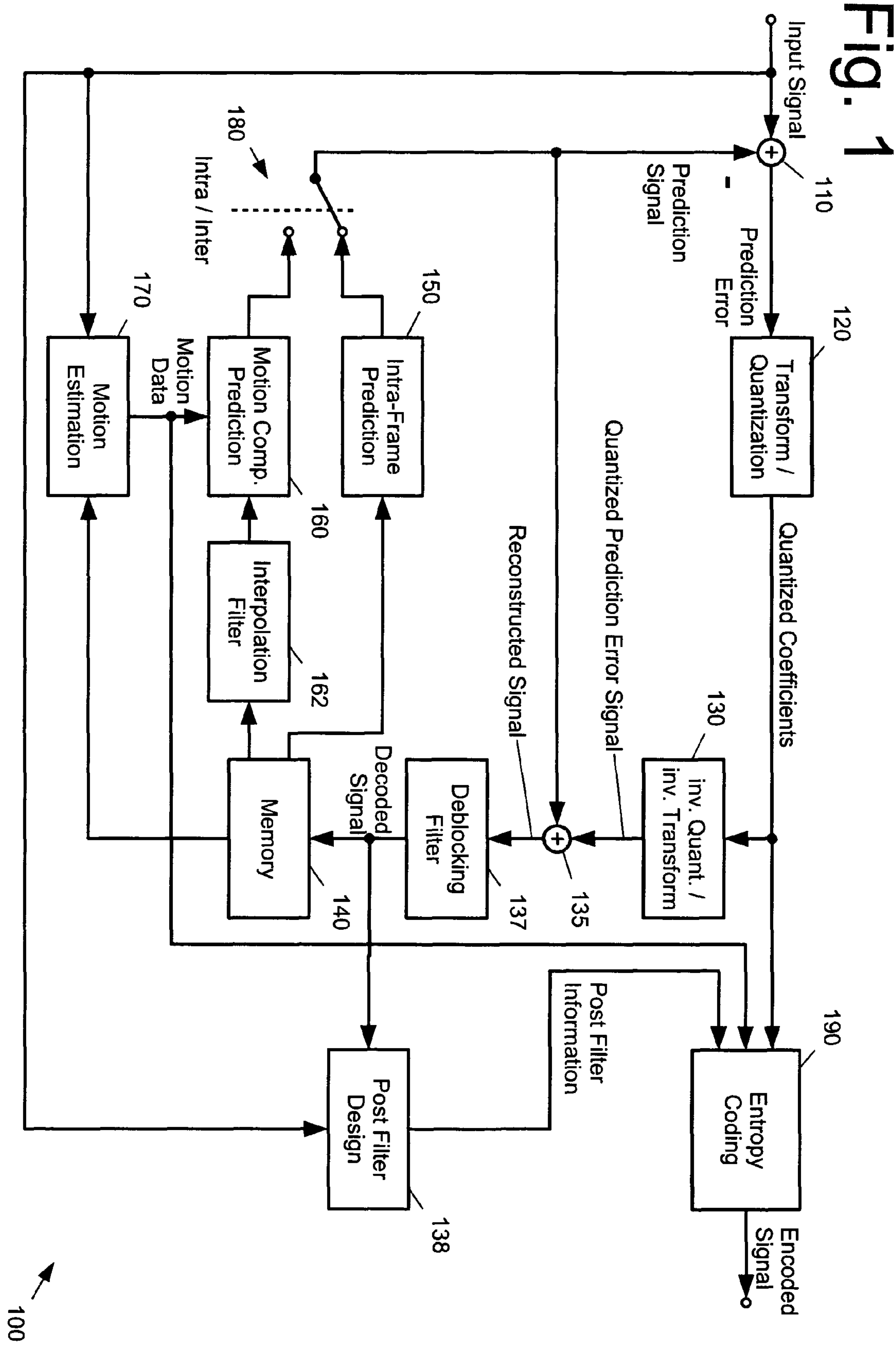
Input Signal
110
Prediction Signal
-
Prediction Error
120
Transform / Quantization
Quantized Coefficients
Quantized Prediction Error Signal
130
inv. Quant. / inv. Transform
Reconstructed Signal
135
Deblocking Filter
137
Decoded Signal
Memory
140
180
Intra / Inter
150
Intra-Frame Prediction
160
Motion Comp. Prediction
162
Interpolation Filter
170
Motion Estimation
Motion Data
190
Entropy Coding
Encoded Signal
Post Filter Information
Post Filter Design
138
100

Fig. 2

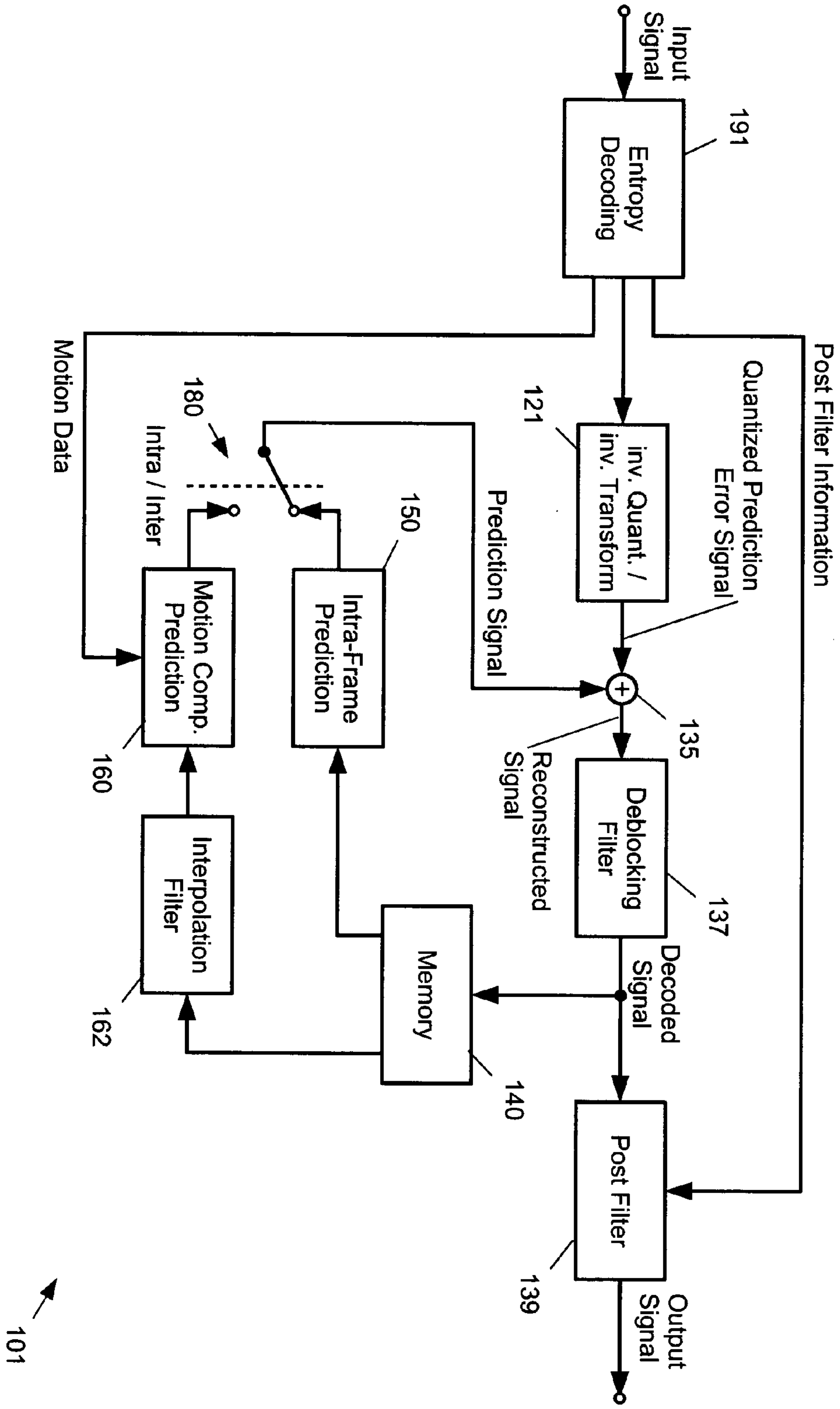
Input Signal
191
Entropy Decoding
Post Filter Information
Quantized Prediction Error Signal
121
inv. Quant. / inv. Transform
Prediction Signal
135
Reconstructed Signal
Deblocking Filter
137
Decoded Signal
Post Filter
139
Output Signal
Motion Data
180
Intra / Inter
150
Intra-Frame Prediction
Motion Comp. Prediction
160
Interpolation Filter
162
Memory
140
101

Fig. 3

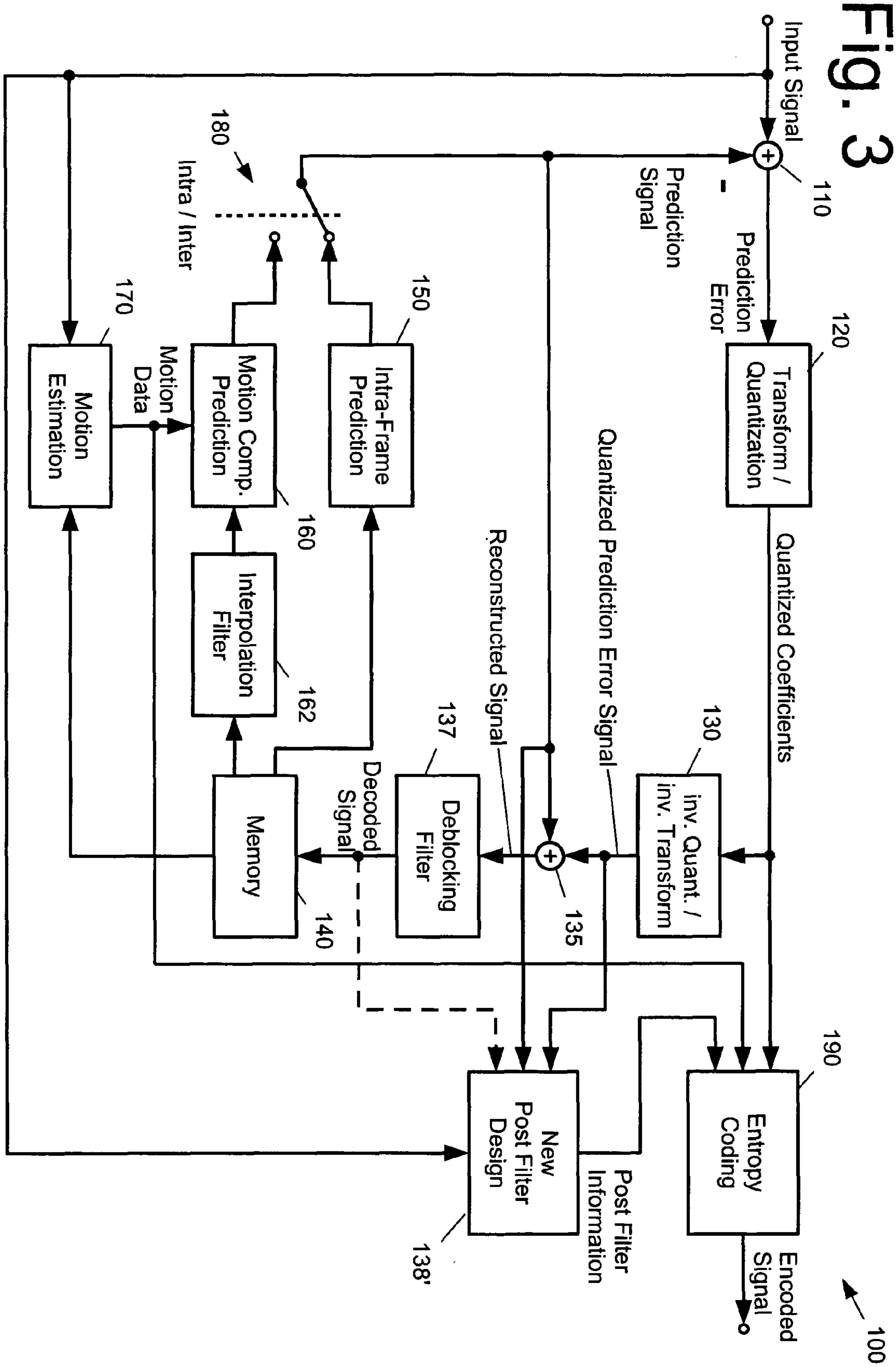
Input Signal
110
Prediction Signal
Prediction Error
120
Transform / Quantization
Quantized Coefficients
Quantized Prediction Error Signal
130
inv. Quant. / inv. Transform
135
Reconstructed Signal
137
Deblocking Filter
Decoded Signal
140
Memory
150
Intra-Frame Prediction
160
Motion Comp. Prediction
162
Interpolation Filter
170
Motion Estimation
Motion Data
180
Intra / Inter
190
Entropy Coding
Encoded Signal
New Post Filter Design
138'
Post Filter Information
100

Fig. 4

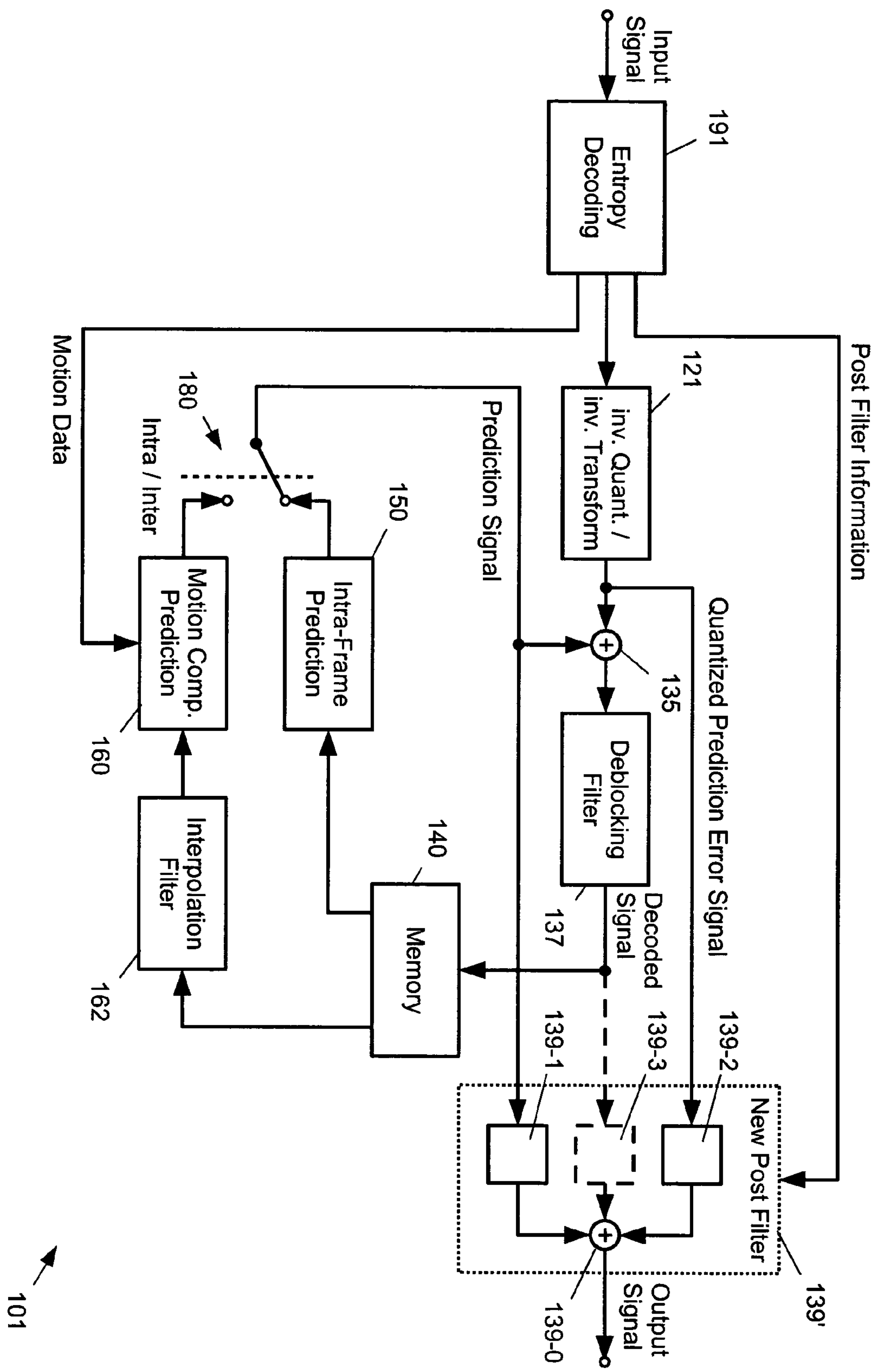
Input Signal
191
Entropy Decoding
Post Filter Information
121
inv. Quant. / inv. Transform
Quantized Prediction Error Signal
Prediction Signal
135
Deblocking Filter
137
Decoded Signal
Motion Data
180
Intra / Inter
150
Intra-Frame Prediction
Motion Comp. Prediction
160
140
Memory
Interpolation Filter
162
139-1
139-3
139-2
New Post Filter
139'
139-0
Output Signal
101

Fig. 5

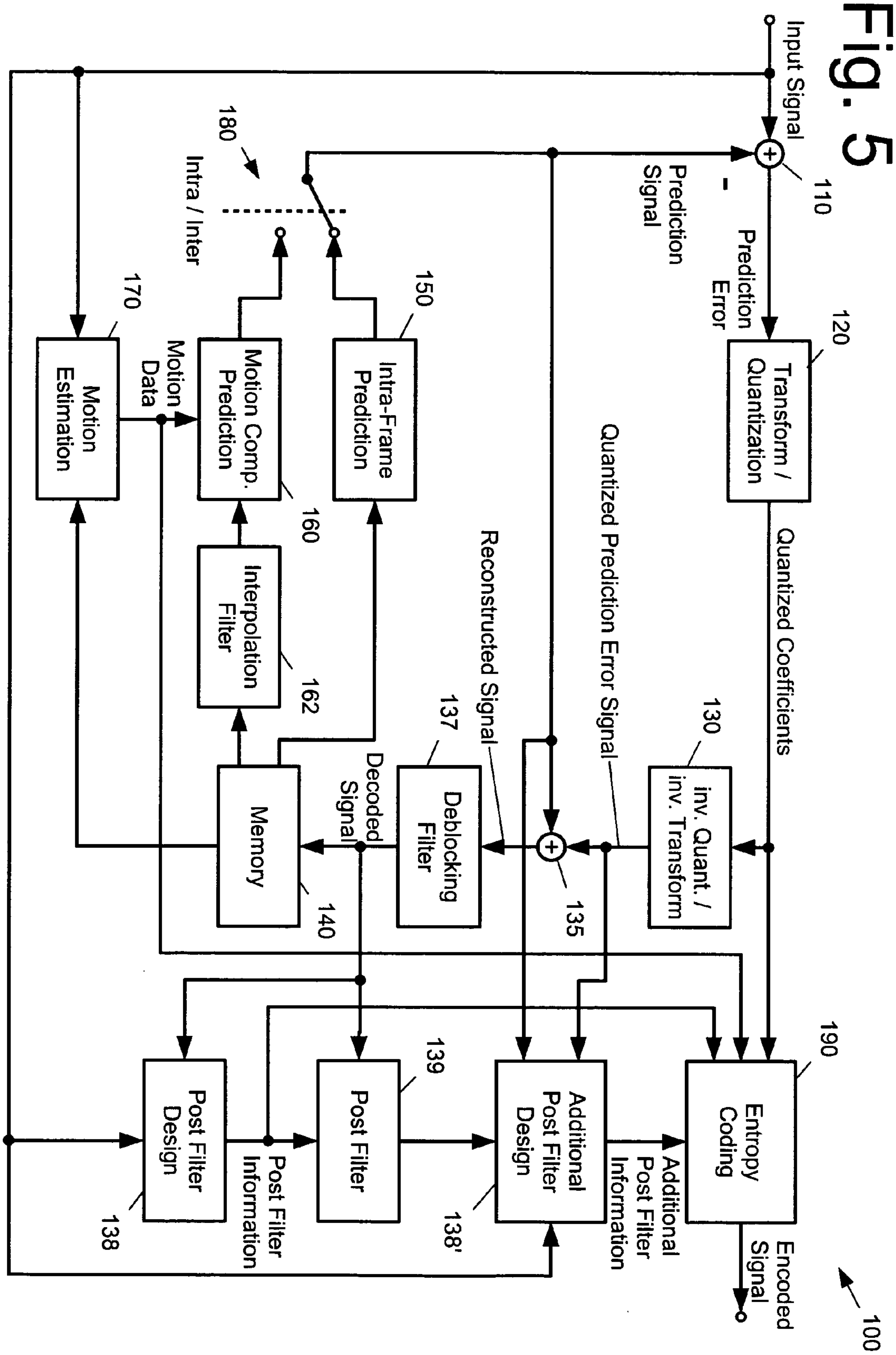

Input Signal
110
Prediction Signal
-
Prediction Error
120
Transform / Quantization
Quantized Coefficients
Quantized Prediction Error Signal
130
inv. Quant. / inv. Transform
135
Reconstructed Signal
137
Deblocking Filter
Decoded Signal
140
Memory
150
Intra-Frame Prediction
160
Motion Comp. Prediction
162
Interpolation Filter
170
Motion Estimation
Motion Data
180
Intra / Inter
190
Entropy Coding
Encoded Signal
100
138'
Additional Post Filter Design
Additional Post Filter Information
139
Post Filter
138
Post Filter Design
Post Filter Information

Fig. 6

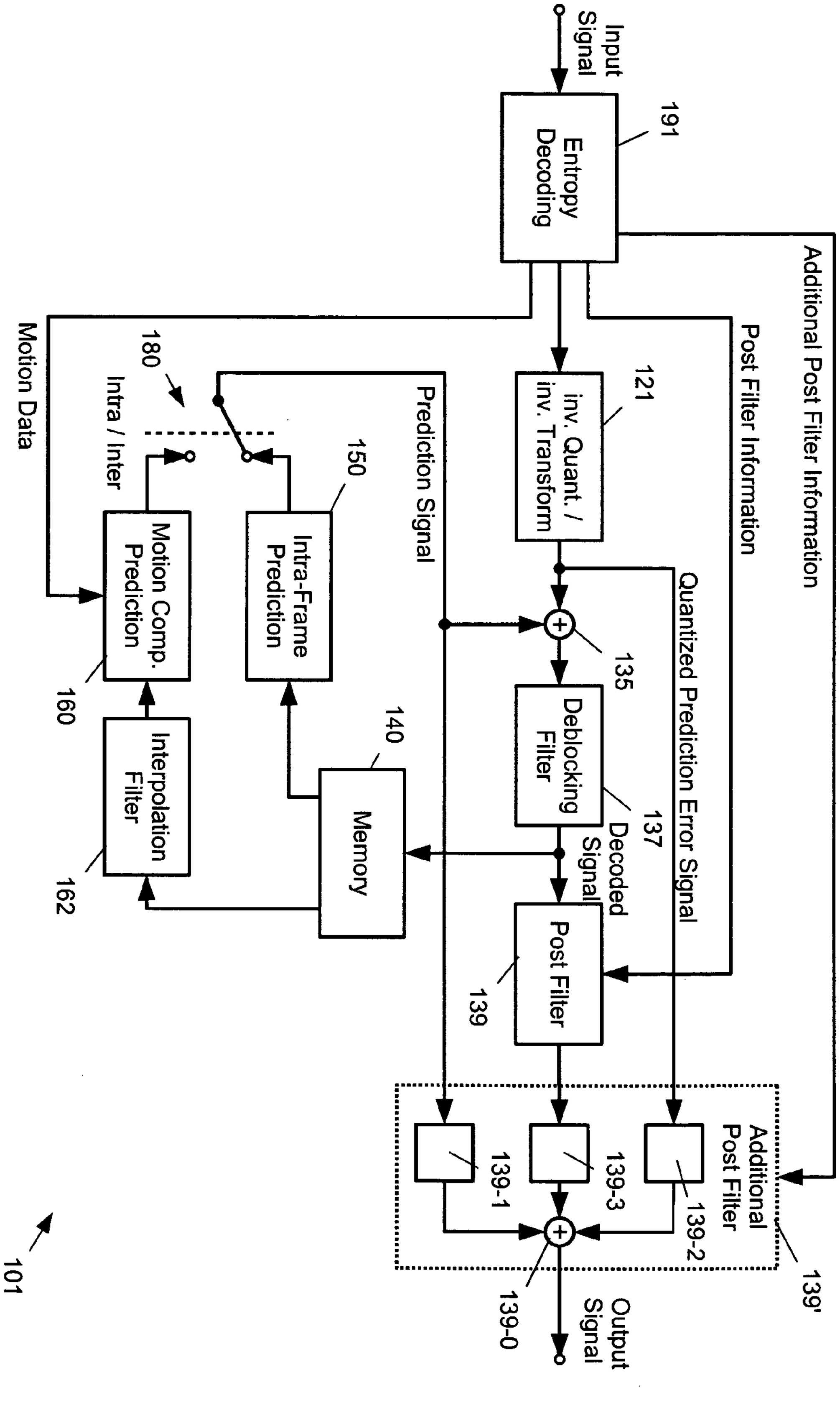

Input Signal
Entropy Decoding
191
Additional Post Filter Information
Post Filter Information
inv. Quant. / inv. Transform
121
Prediction Signal
Motion Data
180
Intra / Inter
150
Intra-Frame Prediction
Motion Comp. Prediction
160
Interpolation Filter
162
Memory
140
135
Deblocking Filter
137
Decoded Signal
Quantized Prediction Error Signal
Post Filter
139
Additional Post Filter
139'
139-1
139-2
139-3
139-0
Output Signal
101

Fig. 7

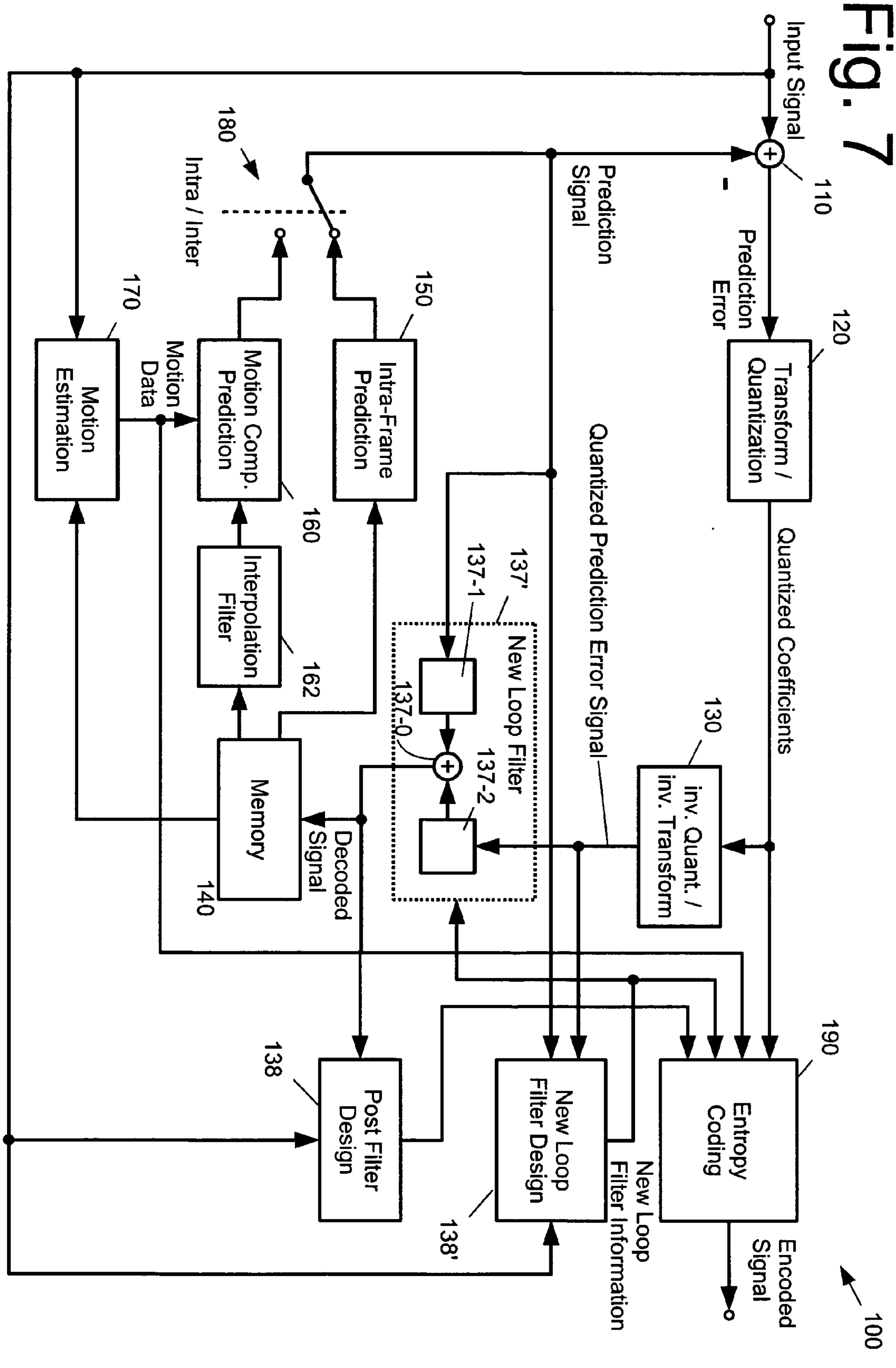
Input Signal
110
Prediction Signal
Prediction Error
120
Transform / Quantization
Quantized Coefficients
Quantized Prediction Error Signal
130
inv. Quant. / inv. Transform
180
Intra / Inter
150
Intra-Frame Prediction
170
Motion Estimation
Motion Data
Motion Comp. Prediction
160
Interpolation Filter
162
137'
137-1
New Loop Filter
137-0
137-2
Memory
140
Decoded Signal
190
Entropy Coding
Encoded Signal
100
New Loop Filter Design
138'
New Loop Filter Information
Post Filter Design
138

Fig. 8

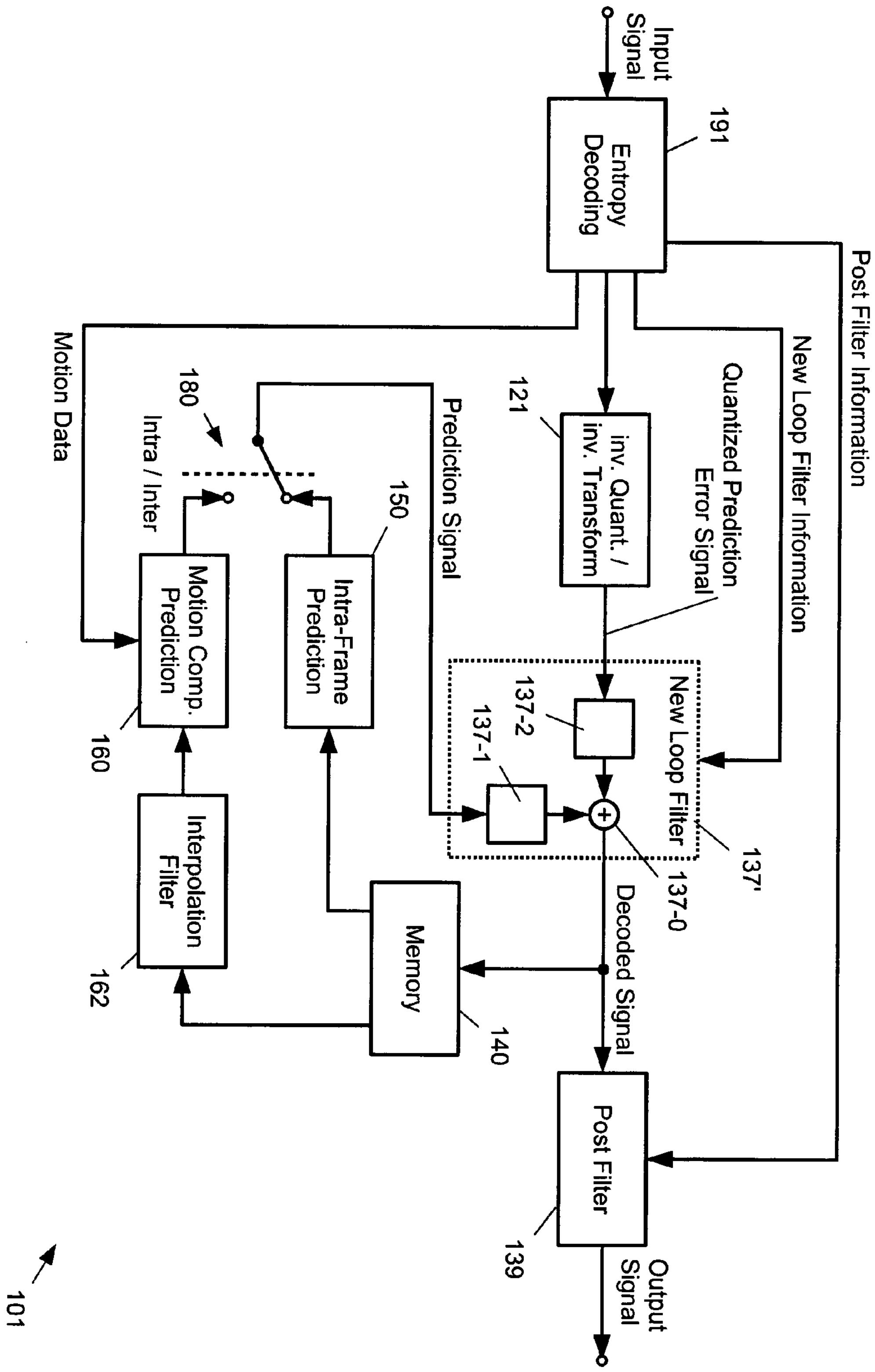
Input Signal
Entropy Decoding
191
Post Filter Information
New Loop Filter Information
Quantized Prediction Error Signal
121
inv. Quant. / inv. Transform
Prediction Signal
180
Motion Data
Intra / Inter
150
Intra-Frame Prediction
Motion Comp. Prediction
160
Interpolation Filter
162
Memory
140
New Loop Filter
137-2
137-1
137'
137-0
Decoded Signal
Post Filter
139
Output Signal
101

Fig. 9

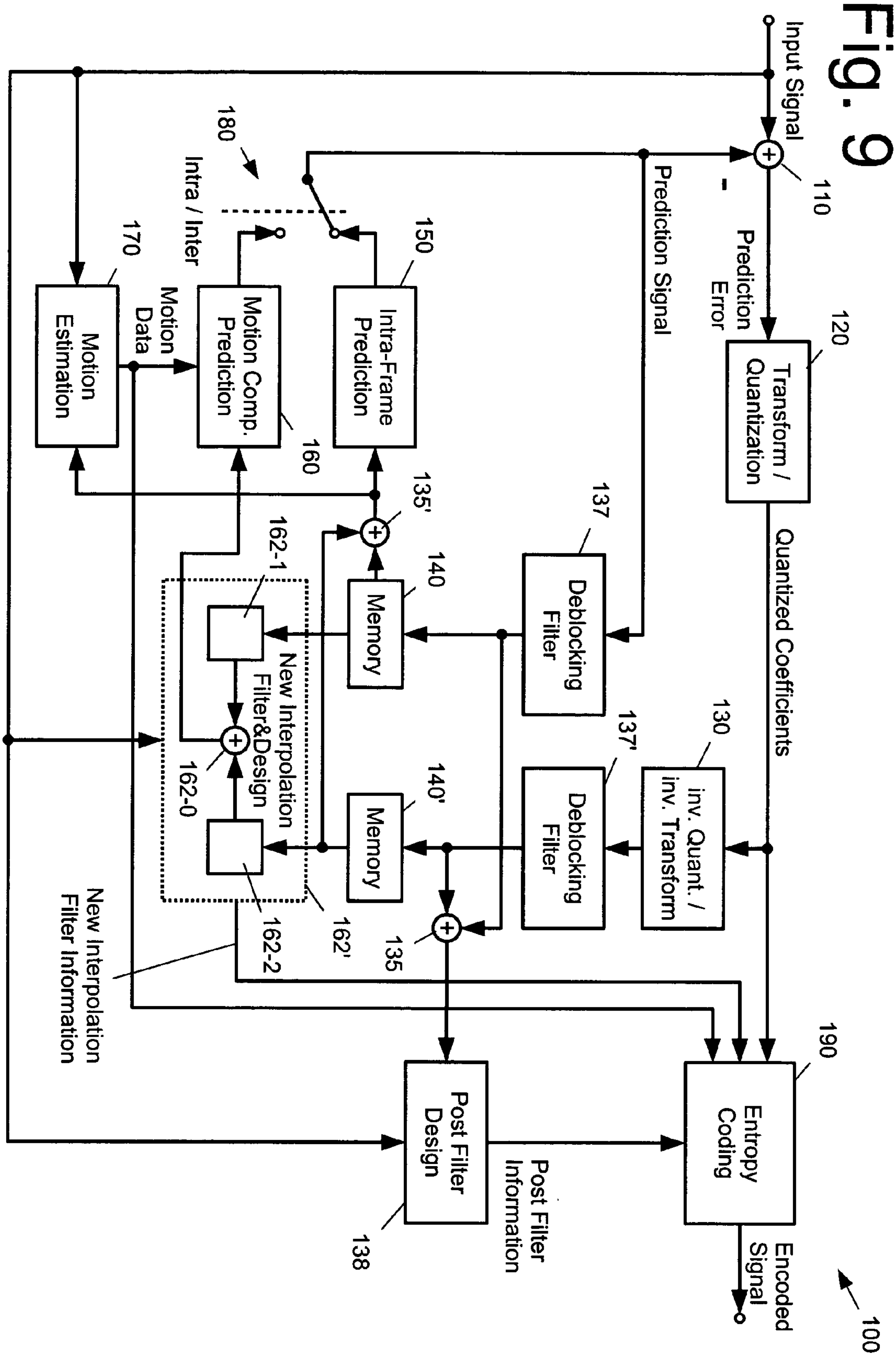
Input Signal
110
-
Prediction Error
120
Transform / Quantization
Quantized Coefficients
130
inv. Quant. / inv. Transform
Prediction Signal
137
Deblocking Filter
137'
Deblocking Filter
140
Memory
140'
Memory
135'
135
150
Intra-Frame Prediction
160
Motion Comp. Prediction
170
Motion Estimation
Motion Data
180
Intra / Inter
162-1
162-0
162-2
162'
New Interpolation Filter&Design
New Interpolation Filter Information
190
Entropy Coding
Encoded Signal
138
Post Filter Design
Post Filter Information
100

Fig. 10

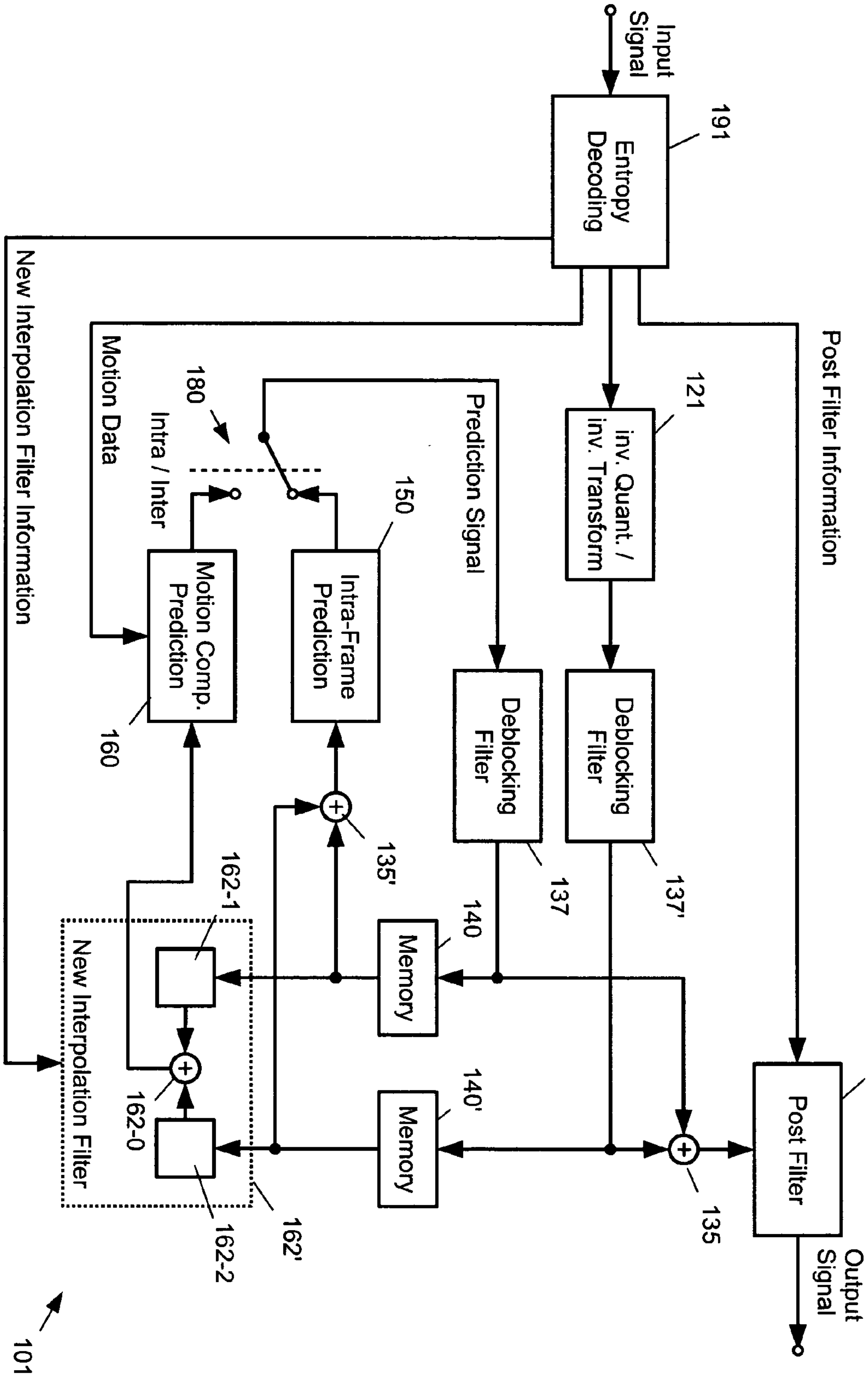

Input Signal
191
Entropy Decoding
Post Filter Information
121
inv. Quant. / inv. Transform
Prediction Signal
180
Motion Data
Intra / Inter
150
Intra-Frame Prediction
Motion Comp. Prediction
160
New Interpolation Filter Information
Deblocking Filter
137'
Deblocking Filter
137
135'
140
Memory
162-1
140'
Memory
139
Post Filter
135
Output Signal
New Interpolation Filter
162-0
162-2
162'
101

Fig. 11

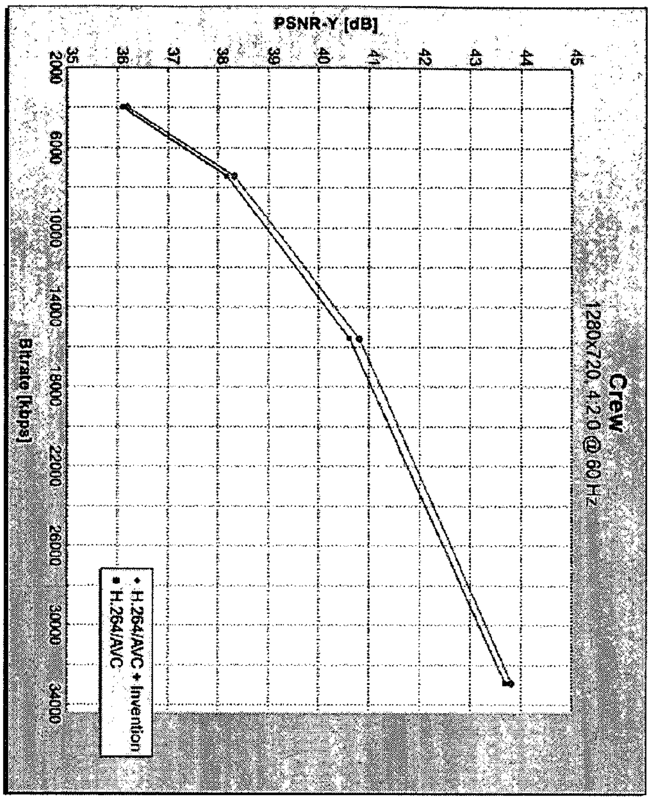

Crew
1280x720, 4:2:0 @ 60 Hz
PSNR-Y [dB]
Bitrate [kbps]
H.264/AVC + Invention
H.264/AVC


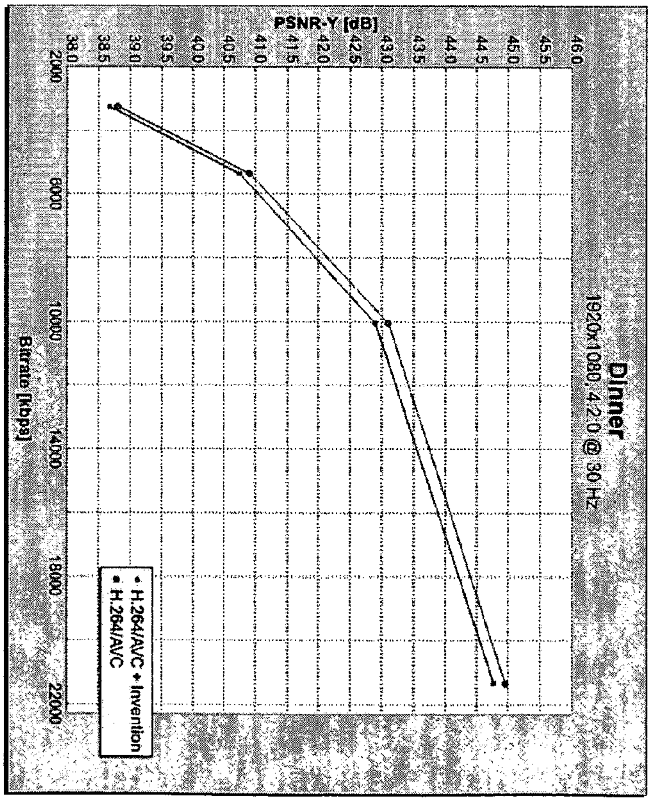

Dinner
1920x1080, 4:2:0 @ 30 Hz
PSNR-Y [dB]
Bitrate [kbps]
H.264/AVC + Invention
H.264/AVC

Europäisches Patentamt
European Patent Office
Office européen des brevets

# EUROPEAN SEARCH REPORT

Application Number
EP 08 01 2036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | EP 1 841 230 A (MATSUSHITA ELECTRIC IND CO LTD [JP]) 3 October 2007 (2007-10-03)<br>* page 2, line 1 *<br>* page 2, line 13 - line 14 *<br>* page 2, line 20 - line 23 *<br>* page 2, line 37 *<br>* page 2, line 39 - line 41 *<br>* page 10, line 35 - line 37 *<br>* figure 8 *<br>----- | 1,3,5,7, 9,10,12 | INV. H04N7/26 |
| A | "MPEG-4 Overview"<br>VIDEO STANDARDS AND DRAFTS, ISO/IEC JTC1/SC29/WG11, no. N4668, 22 April 2002 (2002-04-22), XP030012184<br>* page 54, line 29 - line 32 *<br>----- | 1-17 | |
| A | US 2008/089417 A1 (BAO YILIANG [US] ET AL) 17 April 2008 (2008-04-17)<br>* page 2, paragraphs 29,35 *<br>* page 3, paragraph 38 *<br>* page 7, paragraph 73-77 *<br>----- | 1-17 | |
| | | | TECHNICAL FIELDS SEARCHED (IPC) |
| A | LI Y ET AL: "Local adaptive filter in predictive coding"<br>VISUAL COMMUNICATIONS AND IMAGE PROCESSING; 12-7-2005 - 15-7-2007; BEIJING,, 12 July 2005 (2005-07-12), XP030081072<br>* page 2261 *<br>-----<br>-/-- | 1-17 | H04N |

The present search report has been drawn up for all claims

| Place of search | Date of completion of the search | Examiner |
|---|---|---|
| The Hague | 16 January 2009 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 08 01 2036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BO TAO ET AL: "Removal of Motion Uncertainty and Quantization Noise in Motion Compensation" IEEE TRANSACTIONS ON CIRCUITS AND SYSTEMS FOR VIDEO TECHNOLOGY, IEEE SERVICE CENTER, PISCATAWAY, NJ, US, vol. 11, no. 1, 1 January 2001 (2001-01-01), XP011014154 ISSN: 1051-8215 * page 85 - page 86 * * figure 5 * ----- | 1-17 | |
| | | | TECHNICAL FIELDS SEARCHED (IPC) |

The present search report has been drawn up for all claims

| Place of search | Date of completion of the search | Examiner |
|---|---|---|
| The Hague | 16 January 2009 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 01 2036

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2009

| Patent document cited in search report | Publication date | Patent family member(s) | Publication date |
| --- | --- | --- | --- |
| EP 1841230 A | 03-10-2007 | NONE | |
| US 2008089417 A1 | 17-04-2008 | WO 2008048864 A2 | 24-04-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1841230 A